**Europäisches Patentamt**

**European Patent Office**

**Office européen des brevets**

(19)

(11) Veröffentlichungsnummer : **0 342 336 B1**

# (12) EUROPÄISCHE PATENTSCHRIFT

(45) Veröffentlichungstag der Patentschrift :
**03.06.92 Patentblatt 92/23**

(51) Int. Cl.$^5$ : **A47J 31/057**

(21) Anmeldenummer : **89105207.8**

(22) Anmeldetag : **23.03.89**

(54) **Gerät zum Zubereiten von heissen Getränken, wie Kaffee, Tee od.dgl.**

(30) Priorität : **18.05.88 DE 3816816**

(43) Veröffentlichungstag der Anmeldung :
**23.11.89 Patentblatt 89/47**

(45) Bekanntmachung des Hinweises auf die
Patenterteilung :
**03.06.92 Patentblatt 92/23**

(84) Benannte Vertragsstaaten :
**CH FR IT LI NL**

(56) Entgegenhaltungen :
**DE-A- 2 820 551**
**DE-A- 3 029 332**
**DE-A- 3 541 479**
**GB-A- 1 569 204**

(73) Patentinhaber : **Robert Krups GmbH & Co. KG**
**Heresbachstrasse 29**
**W-5650 Solingen 19 (DE)**

(72) Erfinder : **Precht, Hans-Jürgen, Dipl.-Ing.**
**Westfalenweg 22**
**W-5650 Solingen (DE)**
Erfinder : **Maass, Rudolf**
**Sperlingsweg 35**
**W-5650 Solingen (DE)**

(74) Vertreter : **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

EP 0 342 336 B1

## Beschreibung

Die Erfindung bezieht sich auf ein Gerät zum Zubereiten von heißen Getränken, wie Kaffee, Tee od.dgl. mit einem Gehäuse zur Unterbringung von Schalt- und Steuerelementen sowie einer vorzugsweise als Durchlauferhitzer ausgebildeten Heizeinrichtung, mit einem Frischwasserbehälter und einem das Kaffeemehl od. dgl. aufnehmenden Filter, unter dem ein Auffangbehälter angeordnet ist, wobei oberhalb des Frischwasserbehälters und des Filters zwei Deckel angeordnet sind, von denen jeder über ein Scharnier wahlweise um 180° aus einer Schließlage in eine Öffnungslage oder umgekehrt bewegbar ist.

Derartige Geräte zum Zubereiten von heißen Getränken, wie Kaffee, Tee od dgl. sind in mannigfachen Ausführungsformen bekannt. Dies gilt sowohl für die Ausbildung des Gehäuses als auch der diesem zugeordneten Teile, insbesondere der Deckel. Durch die Anbringung der Deckel soll dem Benutzer wahlweise die Möglichkeit gegeben werden, den einen oder den anderen der beiden vorhandenen Deckel aus der Schließlage in eine Öffnungslage zu überführen, beispielsweise um die Öffnung des Frischwasserbehälters freizulegen, damit ein Füllen des Frischwasserbehälters erfolgen kann. Es kann aber auch der andere Deckel aus seiner Schließlage in die Öffnungslage überführt werden, um den darunter befindlichen Filter freizulegen. Bei anderen Ausführungsformen dient dieser zweite Deckel dazu, einen waagerechten Bereich des Steigrohres freizulegen.

Um dabei das Verschwenken eines der beiden Deckel um jeweils 180° durchführen zu können, sind Scharniere bekanntgeworden, die eine derartige Bewegung jeweils des einen Deckels zulassen. Allen der bisher bekannten Ausführungsformen derartiger Scharniere ist gemeinsam, daß sie verhältnismäßig weit aus der Deckelgrundfläche hervorstehen. Hierdurch wird nicht nur das äußere Erscheinungsbild des Gerätes zum Zubereiten von heißen Getränken, wie Kaffee, Tee od.dgl. nachteilig beeinflußt sondern auch die Herstellung und die Montage der Einzelteile erschwert. Hier will die Erfindung Abhilfe schaffen.

Der Erfindung liegt die Aufgabe zugrunde, Geräte zum Zubereiten von heißen Getränken, wie Kaffee, Tee od.dgl. der eingangs näher gekennzeichneten Art weiter zu verbessern, wobei insbesondere eine solche Ausbildung und Anordnung der Scharniere gewählt werden soll, daß diese das äußere Erscheinungsbild des Gerätes nicht nachteilig beeinflussen. Ferner soll das Zusammensetzen der Einzelteile des Deckels einschl. der zugeordneten Scharniere gegenüber dem Bekannten vereinfacht werden. Dieses Ziel ist erfindungsgemäß dadurch erreicht, daß die beiden Deckel des Kaffeeautomaten auf ihrer Innenseite liegend Lagestellen bzw. Achsstummel aufweisen, die mit Achsstummeln bzw. Lagerstellen drehbeweglich zusammenwirken, welche an einer die Trennfuge der Deckel innen übergreifenden scharnierartigen Halteklammer angeordnet sind. Durch die erfindungsgemäße Ausbildung der Geräte zum Zubereiten von Heißgetränken, wie Kaffee, Tee od.dgl. ergeben sich im Vergleich mit dem Bekannten erhebliche Vorteile. So ist durch die gewählte Anordnung und Ausbildung der scharnierartigen Halteklammer diese in der Schließlage der beiden Deckel überhaupt nicht sichtbar. Vielmehr können die beiden Deckel im oberen Bereich des Gehäuses des Gerätes eine durchgehende, ebene Fläche bilden. Nach außen aus dieser Grundebene vorstehende Teile entfallen vollständig. Die scharnierartige Halteklammer kann als Ganzes hergestellt werden. Die Lagerstellen bzw. die Achsstummel lassen sich bei der Fertigung der Deckel diesen unmittelbar anformen, und zwar an der Innenseite desselben liegend, so daß auch diese nicht sichtbar sind. Dabei wird für die Herstellung der scharnierartigen Halteklammer ein solcher Werkstoff benutzt, der eine gewise Elastizität aufweist. Diese Elastizität wird ausgenutzt, um die Achsstummel der scharnierartigen Halteklammer um ein solches Maß bewegen zu können, daß ihr Einführen in die Lagerstellen möglich wird. Durch die dabei in der scharnierartigen Halteklammer geweckte Kaft erfolgt das Zurückführen der Achsstummel in ihre Ausgangslage. Umgekehrt gilt dies auch dann, wenn die Halteklammer die Lagerstellen aufweist und die Achsstummel an den Deckeln angeordnet sind.

Bei einer Ausführungsform der Erfindung haben die Deckel im Bereich der Trennfuge in ihrer Schließlage flächig aneinanderliegende Teilstücke, die jeweils auf ihrer der Abstützfläche gegenüberliegenden Seite die Lagerstellen für die Achsstummel der scharnierartigen Halteklammer tragen.

Nach einem weiteren Vorschlag der Erfindung ist die scharnierartige Halteklammer ein einstückiger Körper, dessen ebener Mittelteil die Trennfuge zwischen den Deckeln überbrückt und winklig dazu angeordnete Seitenwangen aufweist, die an ihren Enden jeweils ein senkrecht zu ihnen verlaufendes Querstück tragen, die ihrerseits die parallel zu den Teilstücken des Deckels verlaufenden Lagerstummel aufweisen.

Es empfiehlt sich, die Querstücke der Halteklammer in der Schließlage der Deckel mit ihrer Außenfläche jeweils flächig an der Innenwand der Deckel und in der um 180° gedrehten Öffnungslage mit ihrer Innenfläche an den benachbarten Teilstücken der Deckel flachig anliegen zu lassen.

Zweckmäßig ist es, daß die Breite des Mittelteiles der Halteklammer die Höhe der beiden Teilstücke der Deckel etwas übersteigt. Es handelt sich dabei um diejenigen Teilstücke des Deckels, an denen die Lagerstellen für die Achsstummel angeordnet sind.

Nach einem weiteren Vorschlag der Erfindung weisen die beiden Deckel zur Verhinderung ihrer Querbewegung zusammenwirkende Abstützelemente auf. Dabei ist es zweckmäßig, wenn diese Abstützelemente durch abgewinkelte Enden von Rändern der Deckel gebildet sind, die in der wirksamen Lage in Unterbrechungen der geraden Teilstücke der Deckel eingreifen. Sowohl die abgewinkelten Enden als auch die Unterbrechungen lassen sich bei der Fertigung der Deckel mit erzeugen. Zusätzliche Arbeitsgänge sind nicht erforderlich.

Bei einer abgewandelten Ausführungsform der Halteklammer ist diese zwar auch einstückig aus einem Werkstoff, vorzugsweise aus einem Kunststoff, gefertigt, jedoch sind in diesem Falle die Lagerstellen an der Halteklammer angeordnet, während die damit zusammenwirkenden Achsstummel nunmehr an den Deckeln liegen.

Dabei empfiehlt es sich, diese Halteklammer einen ebenen Mittelteil aufweisen zu lassen, der an seinen beiden diametral gegenüberliegenden längeren Kanten in Seitenwangen übergeht, die winklig zur Ebene des Mittelteiles liegen. Die Seitenwangen haben ihrerseits an ihren Enden liegend aufeinander zuweisende Tragflächen, die parallel zum ebenen Mittelteil der Halteklammer verlaufen. Im Endbereich dieser Tragflächen ist jeweils ein Lagerbock angeformt, der mit einer Lagerstelle für die Achsstummel des Deckels ausgerüstet ist. Die Lagerstelle ist dabei jeweils als eine Querbohrung des Lagerbockes ausgebildet.

Auf der Zeichnung ist die Erfindung in einem Ausführungsbeispiel dargestellt und zwar zeigen:

Fig. 1 in Seitenansicht ein erfindungsgemäß ausgebildetes Gerät zum Zubereiten von heißen Getränken, wie Kaffee, Tee od. dgl.,

Fig. 2 in vergrößertem Maßstab und in Draufsicht einen rahmenartigen Versteifungskörper mit den beiden schwenkbar gelagerten Deckeln des Gerätes zum Zubereiten von heißen Getränken gemäß Fig. 1,

Fig. 3 eine Unteransicht der beiden Deckel des Gerätes nach der Fig. 1 bei entferntem Versteifungskörper,

Fig. 4 in Seitenansicht die beiden Deckel gemäß der Fig. 3, wobei der in der Fig. 3 rechte Deckel um 180° geklappt ist,

Fig. 5 in Ansicht die beiden durch eine scharnierartig Halteklammer zusammengehaltenen Deckel des erfindungsgemäßen Gerätes zum Zubereiten von heißen Getränken in der Öffnungslage des einen Deckels gemäß Fig. 4,

Fig. 6 in schaubildlicher Darstellung eine zweite Ausführungsform der scharnierartigen Halteklammer und

Fig. 7 im vergrößerten Maßstab, teilweise in Ansicht und teilweise im Schnitt, einen der beiden Deckel des Gerätes mit den Lagerstellen für die Lagerung der Halteklammer nach Fig. 6.

In den Figuren der Zeichnungen sind nur diejenigen Teile eines Gerätes zum Zubereiten von heißen Getränken, wie Kaffee, Tee od.dgl. dargestellt, welche für das Verstäundnis der Erfindung Bedeutung haben. So fehlen insbesondere die Schalt- und Steuerelemente, die ebenso wie die Heizeinrichtung in dem Gehäuse des Gerätes untergebracht sind. Ferner ist auf die Darstellung der Zuführungsleitung ebenso verzichtet worden wie auf die Angabe von Einzelheiten im Bezug auf den Filter. Es können alle in den Zeichnungen nicht dargestellten Teils eine bekannte Ausbildung haben.

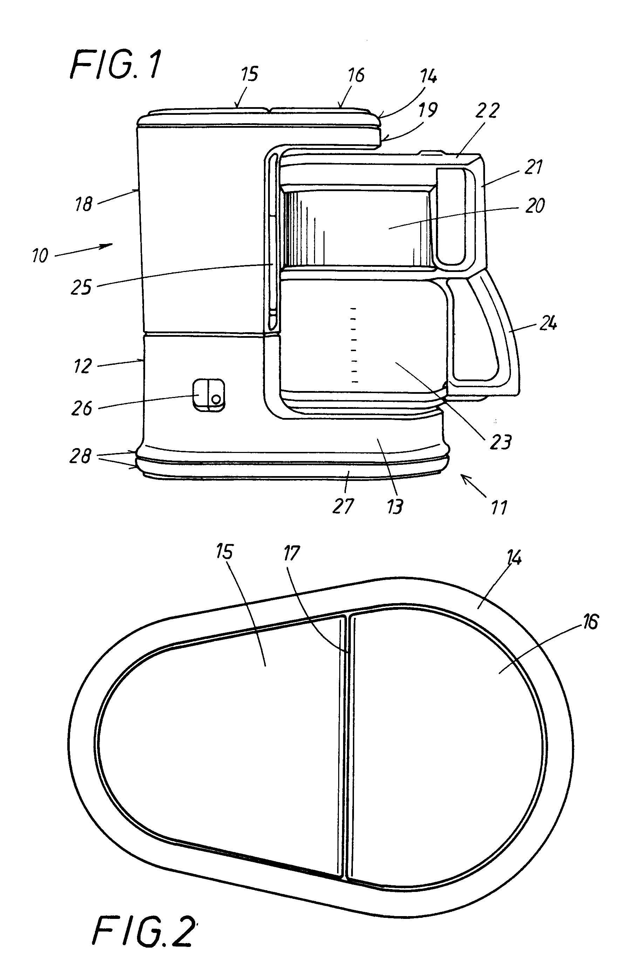

Dem Ausführungsbeispiel nach der Fig. 1 der Zeichnung ist ein generell mit 10 bezeichneter, sogenannter Kaffeeautomat zugrundegelegt. Dieser hat ein Gehäuse 11, das aus einem Kunststoff hergestellt ist. Das Gehäuse hat im Längsschnitt gesehen L-förmige Ausbildung. Der aufrechte Teil 12 bildet dabei den kürzeren Schenkel dieses L's, während der waagerechte Teil 13 in seinen Längenabmessungen größer gehalten ist. In dem Gehäuse 11 sind die Schalt- und Steuerelemente des Kaffeeautomaten 10 in bekannter Weise untergebracht. Dieses Gehäuse ist nach unten hin offen. Es wird jedoch durch einen Boden 27 verschlossen, der z.B. durch Aufstecken mit dem waagerechten Teil 13 des Gehäuses 11 des Kaffeeautomaten 10 verbunden werden kann. Im dargestellten Ausführungsbeispiel haben sowohl der untere Rand des waagerechten Teiles 13 des Gehäuses 11 als auch der Boden 27 eine jeweils mit 28 bezeichnete umlaufende Verdickung. Im Bereich dieser Verdickung 28 liegen die Verbindungsmittel zwischen dem Boden 27 und dem Unterteil 13 des Gehäuses 11.

In Verlängerung des aufrechten Teiles 12 des Gehäuses 11 des Kaffeeautomaten 10 liegt der Frischwasserbehälter 18, der auf die Stirnfläche des aufrechten Teiles 12 aufsteckbar ist. Dabei kann jede gewünschte Verbindungsart eingesetzt werden. Es ist lediglich darauf zu achten, daß das Frischwasser aus einer im Boden des Frischwasserbehälters befindlichen Öffnung einer Heizeinrichtung, beispielsweise einem Durchlauferhitzer zugeführt werden kann. In diesem Durchlauferhitzer erfolgt dann in bekannter Weise das Erhitzen des Wassers. Das erwärmte Wasser wird über ein Steigrohr, welches z.B. den Frischwasserbehälter durchsetzt nach oben geführt bis zur Höhe eines auskragenden Teiles 19 des Frischwasserbehälters 18. Dies bedeutet, daß das Steigrohr neben einem senkrechten einen waagerechten Teil aufweist. Der Auslaß des waagerechten Teiles des Steigrohres liegt über dem generell mit 20 gekennzeichneten Gehäuse eines Filters bekannter Bauart, in dem unter Benutzung einer Filtertüte das Kaffeemehl oder der Tee untergebracht wird. Das Gehäuse des Filters 20 hat einen Handgriff 21. Die obere Öffnung ist durch eine abnehmbare Abdeckung 22 verschlossen.

Das fertige Getränk, beispielsweise der Kaffee, gelangt durch einen meist zentral angeordneten Auslaß aus dem Filter 20 in einen darunter angeordneten Auffangbehälter 23, der im gezeigten Ausführungsbeispiel als Glaskrug ausgebildet ist. Auf seiner Außenfläche ist eine Markierung zur Angabe der Tassenzahl angebracht. Der Auffangbehälter 23 hat ebenfalls einen Griff 24 und steht auf einem vertieften Bereich des waagerechten Teiles 13 des Gehäuses 11.

Im dargestellten Ausführungsbeispiel hat der Kaffeeautomat 10 einen Wasserstandsanzeiger 25. Dieser ist als Rohr gestaltet und mit seinem unteren Bereich mit dem Frischwasserbehälter 18 verbunden. Dabei bildet in bekannter Weise der Wasserstandsanzeiger 25 mit dem Frischwasserbehälter 18 ein kommunizierendes System. Am Gehäuse ist ein bekannter Schalter 26 zum Öffnen oder Unterbrechen des Stromkreises angeordnet.

Auf den oberen Rand des Frischwasserbehälters 18 ist im gewählten Ausführungsbeispiel ein gesondert hergestellter, mit 14 bezeichneter Versteifungskörper aufgesteckt. Es handelt sich dabei um einen einstuckigen, rahmenartigen Aufsteckkörper, der der Formstabilität der Seitenwandungen des Frischwasserbehälters dient.

Im gewählten Ausführungsbeispiel sind dem Kaffeeautomaten 10 zwei mit 15 und 16 bezeichnete Deckel zugeordnet, von denen jeder um 180° aus einer Schließlage in eine Öffnungslage oder umgekehrt bewegt werden kann. Die Schließlage der beiden Deckel 15 und 16 ist in der Fig. 2 der Zeichnungen wiedergegeben. Daraus ergibt sich, daß zwischen den beiden Deckeln 15 und 16 von außen her lediglich eine Trennfuge 17 sichtbar ist, so lange die beiden Deckel 15 und 16 in ihrer Schließlage gehalten sind.

Im gewählten Ausführungsbeispiel liegt der Deckel 15 oberhalb der Öffnung des Frischwasserbehälters 18, während der Deckel 16 oberhalb des auskragenden Teiles 19 des Frischwasserbehälters 18 liegt. In Abwandlung der in Fig. 1 gezeigten Lage kann der auskragende Teil 19 so weit verlängert werden, daß er die gesamte Oberseite des Gehäuses 20 des Filters erfaßt. Dabei kann in diesem Fall auf die Abdeckung 22 verzichtet werden, weil der Filter nach dem Aufklappen des Deckels 16 zugänglich ist, so daß eine Beschickung durch die freigelegte Öffnung hindurch erfolgen kann. Natürlich muß in diesem Falle der Deckel 16 in seinen Abmessungen entsprechend vergrössert werden; was auch für den Versteifungskörper 14 gilt.

Unabhängig davon, welche der beiden Ausführungsformen für den Deckel 15 bzw. 16 gewählt wird, ist es zweckmäßig, die beiden Deckel auf Abstützflächen des Versteifungskörpers 14 zu lagern. Bei diesen Abstützflächen kann es sich um nach innen gezogene Flansche des Stützkörpers 14 handeln, auf denen die Stirnflächen der Deckel ruhen.

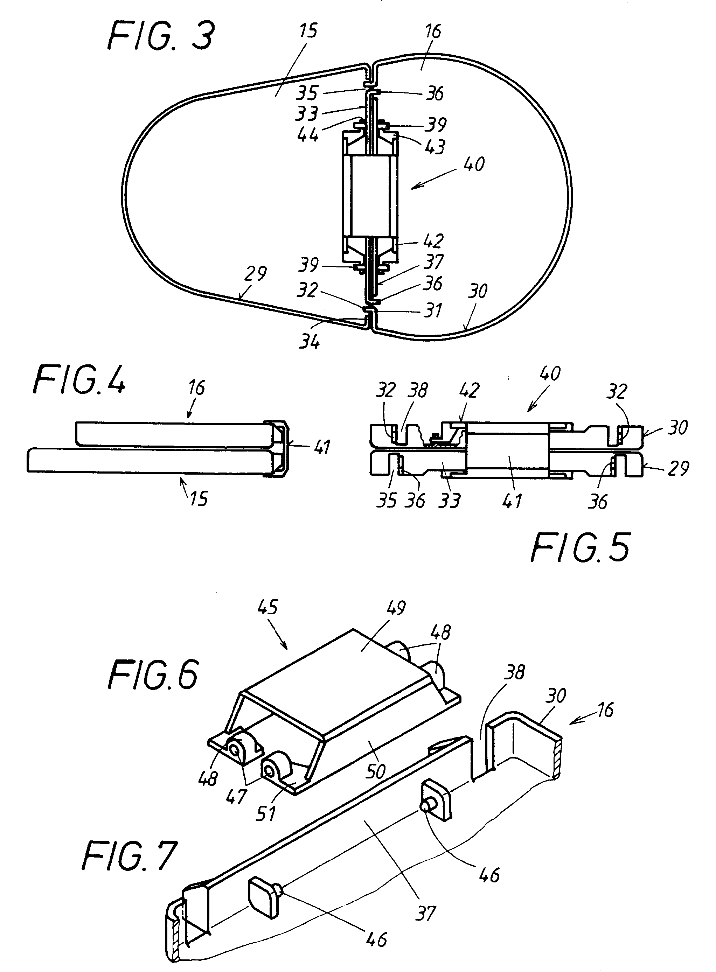

Wie die Fig. 3 der Zeichnungen am besten erkennen läßt, haben die beiden Deckel 15 bzw. 16 bei dieser Ausführungsform des Kaffeeautomaten 10 auf ihrer Innenseite liegend Lagerstellen 39. In die nicht näher bezeichneten Bohrungen dieser Lagerstellen greifen Achsstummel 44 ein, die an einer die Trennfuge 17 der Deckel 15 bzw. 16 innen übergreifenden, scharnierartigen Halteklammer 40 angeordnet sind. Die scharnierartige Halteklammer 40 ist im gewählten Ausführungsbeispiel ein einstückiger Kunststoffkörper, wobei zu seiner Herstellung solche Kunststoffe benutzt werden, die gewisse elastische Eigenschaften aufweisen. Die Elastizität einer derartigen scharnierartigen Halteklammer wird ausgenutzt, um die Achsstummel 44 in die Bohrungen der Lagerstellen 39 einführen zu können.

Die Fig. 3 läßt erkennen, daß im gewählten Ausführungsbeispiel die Deckel 15 bzw. 16 im Bereich der Trennfuge 17 in ihrer Schließlage flächig aneinanderliegende Teilstücke 33 bzw. 37 haben, die jeweils auf ihrer der Abstützfläche gegenüberliegenden Seite die Lagerstellen 39 für die Achsstummel 44 der Halteklammer 40 tragen.

Die einstückige Halteklammer 40 hat einen ebenen Mittelteil 41, der die Trennfuge 17 zwischen dem Deckel 15 bzw. 16 überbrückt. An den Mittelteil schließen sich winklig dazu angeordnete Seitenwangen 42 an, die an ihren Enden jeweils ein senkrecht zu ihnen verlaufendes Querstück 43 tragen. Die Querstücke 43 weisen jeweils die parallel zu den Teilstücken 33 bzw. 37 der Deckel 15 bzw. 16 verlaufenden Lagerstummel 44 auf. Die Lagerstellen 39 sind im gewählten Ausführungsbeispiel den Teilstücken 33 bzw. 37 der Deckel 15 bzw. 16 unmittelbar angeformt.

Die Querstücke 43 der Halteklammer 40 liegen in der Schließlage der Deckel 15 bzw. 16 gemäß der Fig. 3 der Zeichnung mit ihrer Außenfläche jeweils flächig an der Innenwand der Deckel 15 bzw. 16 an. Dagegen liegen die Querstücke 43 in der um 180° gedrehten Öffnungslage mit ihrer Innenfläche an den benachbarten Teilstücken 33 bzw. 37 der Deckel 15 bzw. 16 flächig an.

Wie die Fig. 4 und 5 der Zeichnungen erkennen lassen, übersteigt die Breite des Mittelteiles 41 der Halteklammer 40 etwaas die Gesamthöhe der beiden Teilstücke 33 bzw. 37 der Deckel 15 bzw. 16.

Um eine Querbewegung der Deckel bei ihrem Verschwenken zu verhindern, sind die beiden Deckel 15 bzw. 16 mit zusammenwirkenden Abstützelementen ausgerüstet. Im dargestellten Ausführungsbeispiel sind die Abstützelemente durch abgewinkelte Enden 32 bzw. 36 von Rändern 29 bzw. 30 der Deckel 15 bzw. 16 gebildet, die in der in Fig. 3 wirksamen Lage in Unterbrechungen 35 bzw. 38 der geraden Teilstücke 33 bzw. 37 eingreifen.

In der in Fig. 4 bzw. 5 dargestellten Aufklapplage des einen Deckels kommen die abgewinkelten Enden 32 bzw. 36 außer Eingriff mit den Unterbrechungen 35 bzw. 38. Kurz nach Beginn der Rückbewegung des Deckels 16 gemäß der Fig. 4 in die Schließlage nach der Fig. 3 der Zeichnung kommen die abgewinkelten Enden jedoch alsbald wieder in die Unterbrechungen 35 bzw. 38 und können mit den Begrenzungswandungen der Unterbrechungen zusammenwirken, um so jede Querbewegung der Deckel zueinander zu verhindern.

Der Einfachheit halber ist in den Fig. 4 und 5 lediglich dargestellt, wie der Deckel 16 um 180° aus seiner Schließlage in die Öffnungslage bewegt ist. Es ist dabei darauf verzichtet, die Öffnungslage des anderen Deckels 15 wiederzugeben, weil sich hierbei an der geschilderten Funktion und dem Zusammenwirken der genannten Teile der Deckel nichts ändert.

Die in der Fig. 6 der Zeichnung wiedergegebene zweite Ausführungsform der scharnierartigen Halteklammer ist generell mit 45 bezeichnet. Sie zeichnet sich gegenüber der bisher behandelten Ausführungsform 40 dadurch aus, daß nunmehr an ihr Lagerstellen vorgesehen sind, während die damit zusammenwirkenden Achsstummel an den Deckeln 15 bzw. 16 vorgesehen sind.

Auch die scharnierartige Halteklammer 45 ist als einstückiger, vorzugsweise aus Kunststoff gefertigter Körper hergestellt. Dieser hat einen großflächigen, ebenen Mittelteil 49. Jeweils um 90° versetzt zu dem ebenen Mittelteil 49 hat dieser Seitenwangen 50, deren nicht näher bezeichneten, seitlichen Begrenzungskanten schräg verlaufen. Am Ende dieser Schräge ist jeweils eine Tragfläche 51 vorgesehen. Diese Tragflächen sind an den Enden der Halteklammer 45 paarweise angeordnet und zwar derart, daß die zu einem Paar gehörenden Tragflächen 51 unter Freilassung eines Spaltes einander genähert sind. Die Grundfläche der Tragfläche 51 verläuft jeweils parallel und in Abstand zu dem ebenen Mittelteil 49 der Halteklammer 45. Im Bereich des vorderen freien Endes jeder Tragfläche 51 ist ein Lagerbock 48 vorgesehen und zwar auf der dem ebenen Mitelteil 49 zugekehrten Seite. In der Mitte jedes Lagerbockes liegend ist eine Lagerstelle 47 vorgesehen, die als sacklochartige oder durchlaufende Bohrung ausgebildet ist. Dabei wirken diese Lagerstellen 47 der scharnierartigen Halteklammer 45 mit Achsstummeln 46 zusammen, die dem Deckel 15 bzw. 16 zugeordnet sind. Die Achsstummel 46 sind dabei - wie am besten aus der Fig. 7 der Zeichnung ersichtlich - an der Innenwand des geraden Teilstückes 37 des umlaufenden Randes 30 jedes Deckels 15 bzw. 16 angebracht und zwar so, daß die Achsstummel 46 im Abstand von den geraden Teilstück-en 37 liegen.

Wie bereits erwäuhnt, sind die dargestellten Ausführungen nur beispielsweise Verwirklichungen der Erfindung und diese nicht darauf beschränkt. Vielmehr sind noch mancherlei andere Ausführungen und Anwendungen möglich. Insbesondere kann - ohne vom Erfindungsgedanken abzugehen - die Gestalt der scharnierartigen Halteklammer abweichend von den Ausführungsbeispielen gewählt werden. Die Deckel 15 bzw. 16 können selbstverständlich auch eine andere als die dargestellte Ausführung erhalten. Beispielsweise kö-nnen sie an vorliegende Querschnittsgestaltungen des Frischwasserbehälters und des diesem zugeordneten auskragenden Teiles 29 angepaßt werden. In Sonderfälloen können die beiden Deckel 15 und 16 untereinander auch gleichgestaltete sein. Und schließlich ist es möglich, die scharnierartige Halteklammer auch bei anderen als den dargestellten Kaffeeautomaten zu benutzen. Wenn in den dargesellten und beschriebenen Ausführungsbeispielen davon die Rede ist,daß die einstückige Halteklammer einen ebenen Mittelteil und winklig dazu angeordnete Seitenwangen aufweist, so sei ausdrücklich darauf hingewiesen, daß die Halteklammer auch abweichende Querschnittsgestaltungen haben kann. So sind z.B. Abrundungen beim Übergang vom Mittelteil zu den Seitenwangen ebenso denkbar wie eine gekrümmte Gestaltung.

Bezugszeichenliste :

10 - Kaffeeautomat

11 - Gehäuse

12 - aufrechter Teil (von 11)

13 - waagerechter Teil (von 11)

14 - Versteifungskörper

15 . 1. Deckel

16 - 2. Deckel

17 - Trennfuge (zwischen 15 und 16)

18 - Frischwasserbehälter

19 - auskragender Teil (von 18)

20 - Filter (Gehäuse des Filters)

21 - Handgriff (von 20)

22 - Abdeckung (von 20)

23 - Auffangbehälter (Glaskrug)

24 - Griff (von 23)

25 - Wasserstandsanzeige

26 - Schalter

27 - Boden (von 11)

EP 0 342 336 B1

```
28  -  Verdickung
29  -  Rand (von 15)
3o  -  Rand (von 16)
31  -  abgewinkeltes Teilstück (von 3o)
32  -  vorderes Ende (von 31)
33  -  gerades Teilstück (von 29)
34  -  Abbiegung (von 29)
35  -  Unterbrechung (zwischen 33 und 34)
36  -  abgewinkelte Enden (von 33)
37  -  gerades Teilstück (von 3o)
38  -  Unterbrechung (von 37)
39  -  Lagerstelle (an 33 und 37)
4o  -  scharnierartige Halteklammer
41  -  ebener Mittelteil (von 4o)
42  -  Seitenwangen (von 4o)
43  -  Querstück (von 4o)
44  -  Achsstummel
45  -  scharnierartige Halteklammer (II. Ausführung)
46  -  Achsstummel (Fig. 5)
47  -  Lagerstellen (Fig. 5)
48  -  Lagerbock
49  -  ebener Mittelteil (von 45)
5o  -  Seitenwangen (von 45)
51  -  Tragfläche (für 48)
```

**Patentansprüche**

1. Gerät zum Zubereiten von heißen Getränken, wie Kaffee, Tee od.dgl. mit einem Gehäuse zur Unterbringung von Schalt- und Steuerelementen sowie einer vorzugsweise als Durchlauferhitzer ausgebildeten Heizeinrichtung,mit einem Frischwasserbehälter und einem das Kaffeemehl od. dgl. aufnehmenden Filter, unter dem ein Auffangbehälter angeordnet ist, wobei oberhalb des Frischwasserbehälters und des Filters zwei Deckel angeordnet sind, von denen jeder über ein Scharnier wahlweise um 180° aus einer Schließlage in eine Öffnungslage oder umgekehrt bewegbar ist,
**dadurch gekennzeichnet,**
daß die beiden Deckel (15, bzw. 16) des Kaffeeautomaten (10) auf ihrer Innenseite liegend Lagerstellen (39) bzw. Achsstummel (46) aufweisen, die mit Achsstummeln (44) bzw. Lagerstellen (47) drehbeweglich zusammenwirken, welche an einer die Trennfuge (17) der Deckel (15 bzw. 16) innen übergreifenden scharnierartigen Halteklammer (40 bzw. 45) angeordnet sind.

2. Gerät nach Anspruch 1, dadurch gekennzeichnet, daß die Deckel (15 bzw. 16) im Bereich der Trennfuge (17) in ihrer Schließlage flächig aneinanderliegende Teilstücke (33 bzw. 37) haben, die jeweils auf ihrer der Abstützfläche gegenüberliegenden Seite die Lagerstellen (39) für die Achsstummel (44) der Halteklammer (40) tragen (Fig. 3 bis 5).

3. Gerät nach Anspruch 1 und 2, gekennzeichnet durch eine einstückige Halteklammer (40), deren ebener Mittelteil (41) die Trennfuge (17) zwischen dem Deckel (15 bzw. 16) überbrückt und winklig dazu angeordnete

7

Seitenwangen (42) aufweist, die an ihren Enden jeweils ein senkrecht zu ihnen verlaufendes Querstück (43) tragen, die ihrerseits die parallel zu den Teilstücken(33 bzw. 37) der Deckel (15 bzw. 16) verlaufenden Achsstummel (44) aufweisen (Fig. 3 bis 5).

4. Gerät nach Anspruch 3, dadurch gekennzeichnet, daß die Lagerstellen (39) den Teilstücken (33 bzw. 37) der Deckel (15 bzw. 16) unmittelbar angeformt sind (Fig. 3 bis 5).

5. Gerät nach Anspruch 3, dadurch gekennzeichnet, daß die Querstücke (43) der Halteklammer (40) in der Schließlage der Deckel (15 bzw. 16) mit ihrer Außenfläche jeweils flächig an der Innenwand der Deckel (15 bzw. 16) und in der um 180° gedrehten Öffnungslage mit ihrer Innenfläche an den benachbarten Teilstücken (33 bzw. 37) der Deckel (15 bzw. 16) flächig anliegen (Fig. 3 bis 5).

6. Gerät nach einem oder mehreren der vorangehenden Ansprüche, dadurch gekennzeichnet, daß die Breite des Mittelteiles (41) der Halteklammer (40) die Höhe der beiden Teilstücke (33 bzw. 37) der Deckel (15 bzw. 16) übersteigt (Fig. 3 bis 5).

7. Gerät nach Anspruch 1, dadurch gekennzeichnet, daß die beiden Deckel (15 bzw. 16) zur Verhinderung ihrer Querbewegung zusammenwirkende Abstützelemente aufweisen.

8. Gerät nach Anspruch 7, dadurch gekennzeichnet, daß die Abstützelemente durch abgewinkelte Enden (32 bzw. 36) von Rändern der Deckel (15 bzw. 16) gebildet sind, die in der wirksamen Lage in Unterbrechungen (35 bzw. 38) der geraden Teilstücke (33 bzw. 37) eingreifen (Fig. 3).

9. Gerät nach Anspruch 1, dadurch gekennzeichnet, daß die Deckel (15 bzw. 16) im Bereich der Trennfuge (17) in ihrer Schließlage flächig aneinanderliegende Teilstücke (33 bzw. 37) haben, die jeweils auf ihrer der Abstützfläche gegenüberliegenden Seite Achsstummel (46) für die Lagerstellen (47) einer vorzugsweise einstückigen scharnierartigen Halteklammer (45) tragen (Fig. 6 und 7).

10. Gerät nach Anspruch 1 und 9, gekennzeichnet durch eine einstückige Halteklammer (45) deren ebener Mitelteil (49) die Trennfuge (17) zwischen dem Deckel (15 bzw. 16) überbrückt und der winklig dazu angeordnete Seitenwangen (50) aufweist, die in aufeinander zulaufende, parallel zum Mittelteil (19) liegende Tragflächen (51) aufweist, an denen die Lagerstellen (47) angeordnet sind (Fig. 6 und 7).

11. Gerät nach Anspruch 10, dadurch gekennzeichnet, daß die Tragflächen (51) auf ihrer dem ebenen Mittelteil (49) der Halteklammer (45) zugekehrten Seite angeformte Lagerböcke (49) aufweisen, die ihrerseits jeweils eine als Bohrung ausgebildete Lagerstelle (47) für die Achsstummel (46) der Deckel (15 bzw. 16) aufweisen (Fig. 6 und 7).

## Claims

1. An appliance for preparing hot beverages such as coffee, tea or the like comprising a housing for accommodating switching and control elements and a heating device which is preferably in the form of a continuous-flow heater, comprising a fresh water container and a filter for accommodating the coffee powder or the like and beneath which is disposed a collecting container, wherein arranged above the fresh water container and the filter are two covers of which each is selectively movable by way of a hinge through 180° from a closure position into an open position or vice-versa, characterised in that the two covers (15 and 16 respectively) of the automatic coffee making machine (10) have, disposed on their inside, mounting means (39) and trunnion portions (46) respectively, which rotatably co-operate with trunnion portions (44) and mounting means (47) respectively which are arranged at a hinge-like holding clamp (40 or 45) which engages at the inside over the line of separation (17) between the covers (15, 16).

2. An appliance according to claim 1 characterised in that in the region of the line of separation (17) the covers (15 and 16) have portions (33 and 37 respectively) which lie flat against each other in the closure position of the covers and which each carry on their side in opposite relationship to the contact surface the mounting means (39) for the trunnion portions (44) of the holding clamp (40)) (Figures 3 to 5).

3. An appliance according to claim 1 and claim 2 characterised by a one-piece holding clamp (40) of which a flat central portion (41) bridges over the line of separation (17) between the covers (15 and 16 respectively) and has side wall portions (42) which are arranged at an angle thereto and which at each of their ends carry respective transverse portions (43) which extend perpendicularly to said ends and which in turn have the trunnion portions (44) which extend parallel to the portions (33 and 37 respectively) of the covers (15 and 16) (Figures 3 to 5).

4. An appliance according to claim 3 characterised in that the mounting means (39) are formed directly on the portions (33 and 37) of the covers (15 and 16 respectively) (Figures 3 to 5).

5. An appliance according to claim 3 characterised in that the transverse portions (43) of the holding clamp (40) each lie flat with their outside surface against the inside wall of the respective covers (15 and 16) in the closure position of the covers (15 and 16) and in the open position of being turned through 180° they lie flat with their inside surface against the adjacent portions (33 and 37 respectively) of the covers (15 and 16) (Figures 3 to 5).

6. An appliance according to one or more of the preceding claims characterised in that the width of the central portion (41) of the holding clamp (40) exceeds the height of the two portions (33 and 37 respectively) of the covers (15 and 16) (Figures 3 to 5).

7. An appliance according to claim 1 characterised in that the two covers (15 and 16) have support elements which co-operate to prevent transverse movement thereof.

8. An appliance according to claim 7 characterised in that the support elements are formed by angled ends (32 and 36 respectively) of edges of the covers (15 and 16) which in the operative position engage into interruptions (35 and 38 respectively) in the straight portions (33 and 37) (Figure 3).

9. An appliance according to claim 1 characterised in that in the region of the line of separation (17) the covers (15 and 16) have portions (33 and 37 respectively) which lie flat against each other in the closure position of the covers and which each carry on their side in opposite relationship to the support surface trunnion portions (46) for the mounting means (47) of a preferably one-piece hinge-like holding clamp (45) (Figures 6 and 7).

10. An appliance according to claims 1 and 9 characterised by a one-piece holding clamp (45) whose flat central portion (49) bridges over the line of separation (17) between the covers (15 and 16) and which has side wall portions (50) which are arranged at an angle thereto and which have carrier surfaces (51) which extend towards each other and which are parallel to the central portion (49) and on which the mounting means (47) are arranged (Figures 6 and 7).

11. An appliance according to claim 10 characterised in that on their side which is towards the flat central portion (49) of the 7049holding clamp (45) the carrier surfaces (51) have mounting blocks (48) which are formed thereon and which in turn each have a respective mounting means (47) in the form of a bore for the trunnion portions (46) of the covers (15 and 16 respectively) (Figures 6 and 7).

**Revendications**

1. Appareil pour la préparation de boissons chaudes, telles que le café, le thé ou similaires, comportant un corps destiné au logement d'éléments de commutation et de commande ainsi que d'un dispositif de chauffage constitué, de préférence, par des éléments de chauffage à circulation, d'un récipient d'eau froide et d'un filtre destiné à recevoir le café moulu ou un produit similaire, sous lequel est disposé un récipient de réception, deux couvercles étant disposés au-dessus du récipient d'eau fraîche et du filtre, chacun de ceux-ci étant susceptible d'être déplacé de 180° à l'aide d'une charnière à partir d'une position de fermeture à une position d'ouverture ou inversement,
caractérisé en ce que
les deux couvercles (15 ou 16) de l'appareil automatique à café (10) présentant des emplacements de palier (39) ou des moignons (46) d'axe situés sur leur côté intérieur qui coopèrent de façon rotative avec respectivement des moignons d'axe (44), ou des emplacements de palier (47), qui sont disposés sur une bride de fixation (40 ou 45) du genre d'une charnière recouvrant, du côté intérieur, l'intervalle de séparation (17) des couvercles (15 ou 16).

2. Appareil selon la revendication 1, caractérisé en ce que les couvercles (15 ou 16) comportent dans la zone de leur intervalle de séparation (17) des parties (33 ou 37) qui s'appliquent à plat l'une contre l'autre quand ils sont en position de fermeture et qui portent chacun sur leur côté opposé à la surface d'appui, les emplacements de palier (39) destinés aux moignons d'axe (44) de la bride de fixation (40) (figures 3 à 5).

3. Appareil selon la revendication 1 ou 2, caractérisé en ce qu'il comporte une bride de fixation (40) réalisée en une seule pièce dont la partie médiane (41) franchit l'intervalle de séparation (17) entre les couvercles (15 et 16) et présente des joues latérales (42) qui forment un angle par rapport à celle-ci et qui portent chacune à leur extrémité une pièce transversale (43) qui est disposée perpendiculairement à celle-ci, et qui présentent de leur côté les moignons d'axe (44) parallèles aux parties (33 ou 37) des couvercles (15 ou 16) (figures 3 à 5).

4. Appareil selon la revendication 3, caractérisé en ce que les emplacements de palier (33) sont formés directement sur les parties (33 ou 37) des couvercles (15 ou 16) (figures 3 à 5).

5. Appareil selon la revendication 3, caractérisé en ce que les pièces transversales (43) de la bride de fixation (40) sont appliquées à plat par leur surface extérieure (15 ou 16) lorsque les couvercles (15 ou 16) sont en position de fermeture, et par leur surface intérieure contre les parties voisines (33 ou 37) des couvercles (15 ou 16) lorsqu'ils sont tournés de 180°, en position d'ouverture (figures 3 à 5).

6. Appareil selon l'une ou plusieurs des revendications précédentes, caractérisé en ce que la largeur de la partie médiane (41) de la bride de fixation (40) dépasse la hauteur des deux parties (33 ou 37) des couvercles (15 ou 16) (figures 3 à 5).

7. Appareil selon la revendication 1, caractérisé en ce que les deux couvercles (15 ou 16) présentent des éléments d'appui qui coopèrent entre eux pour empêcher leur déplacement transversal.

8. Appareil selon la revendication 7, caractérisé en ce que les éléments d'appui sont formés par des extrémités coudées (32 ou 36) des bords des couvercles (15 ou 16) qui pénètrent, en position d'action, dans des interruptions (35 ou 38) des parties droites (33 ou 37).

9. Appareil selon la revendication 1, caractérisé en ce que les couvercles (15 ou 16) comportent, dans la zone de l'intervalle de séparation (17) des parties (33 ou 37) qui sont disposées à plat l'une contre l'autre quand ceux-ci sont en position de fermeture et qui portent chacune sur leur côté situé à l'opposé de la surface d'appui, des moignons d'axe (46) destinés aux emplacements de palier (47) d'une bride de fixation du genre d'une charnière réalisée de préférence en une seule pièce (figures 6 et 7).

10. Appareil selon la revendication 1 et 9, caractérisé en ce qu'il comporte une bride de fixation (45) en une seule pièce, dont la partie médiane (49) franchit l'intervalle de séparation (17) entre les couvercles (15 et 16) et présente des joues latérales (50) disposées en équerre par rapport à celle-ci, qui sont dotées de surfaces porteuses (51) parallèles à la partie médiane (19) sur lesquelles sont disposés les emplacements de palier (47) (figures 6 et 7).

11. Appareil selon la revendication 10, caractérisé en ce que les surfaces porteuses (51) sont dotées de supports de palier (48) formés sur leur côté situé à l'opposé de la partie médiane plane (49) de la bride de fixation (45), lesdits supports de palier présentant de leur côté un emplacement de palier (47) constitué par un alésage, destiné aux moignons (46) d'axe des couvercles (15 ou 16) (figures 6 et 7).

FIG.1

FIG.2

FIG. 3

FIG.4

FIG.5

FIG.6

FIG.7